(19) **Europäisches Patentamt / European Patent Office / Office européen des brevets**

(11) **EP 4 693 041 A1**

(12) **EUROPEAN PATENT APPLICATION**
published in accordance with Art. 153(4) EPC

(43) Date of publication:
**11.02.2026 Bulletin 2026/07**

(21) Application number: **24777653.7**

(22) Date of filing: **06.03.2024**

(51) International Patent Classification (IPC):
**G06F 9/48** (2006.01)

(52) Cooperative Patent Classification (CPC):
**G06F 9/48; G06F 9/50**

(86) International application number:
**PCT/CN2024/080265**

(87) International publication number:
**WO 2024/198863 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.03.2023 CN 202310332479**

(71) Applicant: **Cambricon Technologies Corporation
Limited
Beijing 100191 (CN)**

(72) Inventors:
• **SUN, Zheng
Beijing 100191 (CN)**
• **LI, Ming
Beijing 100191 (CN)**
• **ZHANG, Wei
Beijing 100191 (CN)**
• **YU, Xin
Beijing 100191 (CN)**

(74) Representative: **Huang, Liwei
Cäcilienstraße 12
40597 Düsseldorf (DE)**

(54) **MULTI-CORE SYSTEM-BASED TASK SCHEDULING METHOD AND APPARATUS, AND RELATED PRODUCT**

(57) The present disclosure discloses a task scheduling method based on a multi-core system, a task scheduling apparatus and related products. The task scheduling apparatus is included as a processing apparatus in a combined processing apparatus, and the combined processing apparatus further includes an interface apparatus and a computing apparatus. The computing apparatus interacts with the processing apparatus to jointly complete a computing operation specified by a user. The combined processing apparatus further includes a storage apparatus, which is connected to the computing apparatus and the processing apparatus respectively and is configured to store data of the computing apparatus and the processing apparatus. The solution of the present disclosure provides a method for scheduling a matrix multiplication-type operation task on a multi-core system, which may effectively reduce data IO and improve processing efficiency.

FIG. 1

**Description**

**CROSS REFERENCE TO RELATED APPLICATION**

The present application claims priority to Chinese Patent Application No. 202310332479.8 with the title of "Multi-core System-Based Task Scheduling Method and Apparatus, and Related Product" filed on March 30, 2023.

**TECHNICAL FIELD**

The present disclosure generally relates to the field of task scheduling. More specifically, the present disclosure relates to a task scheduling method based on a multi-core system, a task scheduling apparatus, a computer readable storage medium, a computer program product, a processing apparatus, a chip, and a board card.

**BACKGROUND**

General matrix multiplication (GEMM) is the most basic component in the field of high performance computation (HPC). From traditional scientific computing to emerging deep learning. GEMM plays a very important role, for example, in computational fluid dynamics (CFD), dynamic molecular simulation software CP2K, k-nearest neighbor (kNN) and kMeans problems in large-scale physical simulations, as well as fully connected layer in deep learning, recurrent neural network (RNN), long short-tenn memory network (LSTM), gated recurrent unit (GRU), etc.

However, the optimization of GEMM is a relatively difficult task, especially on multi-core systems, and the current hardware for accelerating GEMM basically relies on multi-core architectures. Different multi-core architectures have different numbers of cores, different core organizations and divisions, and possibly different storage unit configurations. The task splitting among multiple cores has a great impact on the performance of GEMM. Good task splitting may enable multiple cores to work together and greatly improve the performance of GEMM.

In view of this, there is an urgent need for a solution that may perform task scheduling based on a multi-core system to support multi-core efficient parallel processing of computing tasks such as matrix multiplication.

**SUMMARY**

In order to address one or multiple technical problems mentioned above, the present disclosure provides a task scheduling solution based on a multi-core system.

A first aspect of the present disclosure provides a task scheduling method based on a multi-core system, where the task includes a matrix multiplication-type operation task, the multi-core system includes multiple computing units, each computing unit includes one or multiple processor cores, each processor core has a local memory, and the method includes: determining the number of schedulable computing units T: splitting the matrix multiplication-type operation task by a row-column grid method based on the schedulable computing units: determining the amount of data that a computing unit needs to interact with an external circuit according to a splitting solution: determining optimization parameters of the splitting solution to minimize the amount of data to be interacted: and scheduling the matrix multiplication-type operation task to be executed in parallel on the computing units according to the optimization parameters.

A second aspect of the present disclosure provides a task scheduling apparatus configured to perform the task scheduling method of the first aspect of the present disclosure.

A third aspect of the present disclosure provides a computer-readable storage medium, on which program instructions are stored, which, when loaded and performed by a processor, enable the processor to perform the task scheduling method of the first aspect of the present disclosure. A fourth aspect of the present disclosure provides a computer program product, including computer programs or instructions, which, when executed by a processor, implement the task scheduling method of the first aspect of the present disclosure. A fifth aspect of the present disclosure provides a processing apparatus, including the task scheduling apparatus of the second aspect of the present disclosure. A sixth aspect of the present disclosure provides a chip, including the processing apparatus of the fifth aspect of the present disclosure. A seventh aspect of the present disclosure provides a board card, including the chip of the fourth aspect of the present disclosure.

Through the task scheduling method, task scheduling apparatus, computer-readable storage medium, processing apparatus, chip and board card provided above, the embodiment of the present disclosure provides an optimized task scheduling solution for the implementation of the matrix multiplication-type operation task on the multi-core system, which may effectively reduce frequent data exchange and loading, avoid input/output (I/O) bottleneck problems, and fully utilize the parallel operation characteristics of the multi-core architecture to improve processing efficiency.

## BRIEF DESCRIPTION OF DRAWINGS

By reading the following detailed description with reference to drawings, the above and other objects, features and technical effects of exemplary implementations of the present disclosure will become easier to understand. In the drawings, several implementations of the present disclosure are shown in an exemplary but not restrictive manner, and the same or corresponding reference numerals indicate the same or corresponding parts.

FIG. 1 is a schematic diagram of a storage (memory) architecture of a multi-core system to which the embodiment of the present disclosure may be applied.

FIG. 2 is a schematic diagram of a first implementation form of a chessboard algorithm according to some embodiments of the present disclosure.

FIG. 3 is a schematic diagram of a second implementation form of a chessboard algorithm according to other embodiments of the present disclosure.

FIG. 4 is an exemplary flow chart of a task scheduling method based on a multi-core system according to an embodiment of the present disclosure.

FIG. 5 is an exemplary implementation of a Cannon algorithm according to an embodiment of the present disclosure.

FIG. 6 is a schematic storage diagram of data at different storage levels.

FIG. 7 is a group splitting example according to an embodiment of the present disclosure.

FIG. 8 is an example of a reduction operation process.

FIG. 9 is a schematic diagram of matrix multiplication operation splitting for a general edge-case parallel processing (GEPP) mode.

## DETAILED DESCRIPTION

Technical solutions in embodiments of the present disclosure will be described clearly and completely hereinafter with reference to the drawings in the embodiments of the present disclosure. Obviously, the embodiments to be described are merely some rather than all examples of the present disclosure. All other embodiments obtained by those skilled in the art based on the embodiments of the present disclosure without creative efforts shall fall within the scope of protection of the present disclosure.

It should be understood that terms such as "first", "second", "third", and "fourth" appear in the claims, specification, and drawings are used for distinguishing different objects rather than describing a specific order. It should be understood that terms "including" and "comprising" used in the specification and the claims indicate the presence of a feature, an entity, a step, an operation, an element, and/or a component, but do not exclude the existence or addition of one or multiple other features, entities, steps, operations, elements, components, and/or collections thereof.

It should also be understood that terms used in the specification of the present disclosure are merely intended to describe a specific embodiment rather than to limit the present disclosure. As being used in the specification and the claims of the present disclosure, unless the context clearly indicates otherwise, singular forms such as "a", "an", and "the" are intended to include plural forms. It should also be understood that a term "and/or" used in the specification and the claims refers to any and all possible combinations of one or multiple relevant listed items and includes these combinations.

As being used in the specification and the claims of the present disclosure, a term "if" may be interpreted as "when", or "once" or "in response to a determination" or "in response to a case where something is detected" depending on the context. Similarly, depending on the context, a clause "if it is determined that" or "if [a described condition or event] is detected" may be interpreted as "once it is determined that", or ''in response to a determination", or "once [a described condition or event] is detected", or "in response to a case where [a described condition or event] is detected".

Specific implementations of the present disclosure will be described in detail in combination with drawings below.

### Exemplary storage architecture

As mentioned above, existing multi-core systems vary in their specific structures. For example, some multi-core systems, such as NVIDIA multi-core architectures, including but not limited to Turing architecture, Volt architecture, Ampere architecture, etc., are composed of multiple independent streaming multiprocessors (SM), and each SM contains warp schedulers, instruction dispatch units, register files and local caches (an L1 cache and a shared memory). Specifically, for NVIDIA A100, it contains 108 SMs, each of which contains four warp schedulers, four instruction dispatch units, four 16384*32-bit register files, and a shared memory of size 192K. Some other multi-core systems, such as Cambricon multi-core architectures, are composed of multiple computing clusters, each of which has multiple computing cores Ipc. These computing cores share a cache (shared memory), and each computing core has a local cache. In addition, some multi-core architectures also include an L2 cache, which is shared by all streaming processors (or computing clusters), with a capacity ranging from a few megabytes to tens of megabytes. For example, NVIDIA A100 has a 40 megabyte-sized last level cache (LLC). LLC may have multiple operating modes, including data lock, streaming access, and clearing and writing back to a system memory. In order to fully utilize the characteristics of LLC lock access to data and maximize the utilization of data resident in LLC, multi-core systems may increase the cache hit rate by increasing the probability of accessing the same piece of global memory in a short period of time, thereby achieving the purpose of bandwidth acceleration.

Since the matrix multiplication-type operation task may be implemented on various multi-core architectures, the task scheduling solution needs to consider compatibility and versatility with different multi-core architectures. The inventors notice that the key issue of task splitting optimization on a multi-core architecture is to optimize data I/O. Since the processor core is subject to the limitation on the capacity of internal storage resources, a huge amount of data computing may cause a large amount of data interaction between a processor core and an external storage device. The bandwidth of the I/O bus between the processor core and the external storage device is limited, so a serious I/O bottleneck problem is likely to occur, which in turn causes delays in data transfer and greatly reduces the efficiency during parallel computing. Furthermore, not only will the limitation on the bandwidth of the I/O bus becomes a bottleneck for system performance, but the large amount of I/O memory accesses between the processor core and the external storage device will also have an adverse impact on computing and power consumption overhead.

In view of this, the present disclosure provides a task scheduling solution based on the storage architecture of the multi-core system, starting from the perspective of optimizing the amount of data interaction between the processor core and the external circuit (such as the external storage device), which is used to efficiently schedule the matrix multiplication-type operation task to the multi-core system for parallel execution, thereby improving the efficiency of parallel computing of the multi-core system.

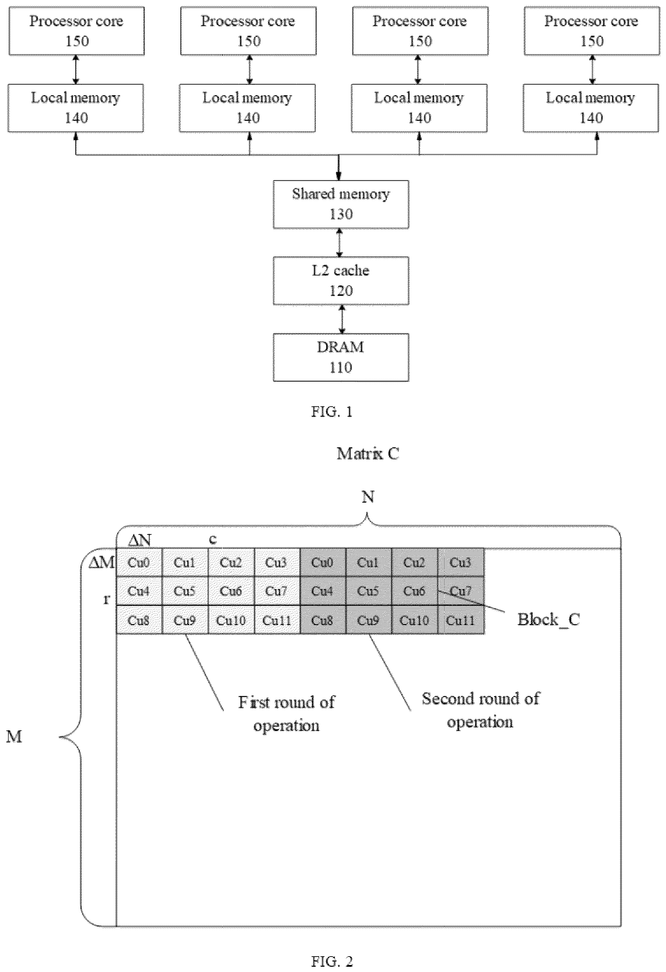

FIG. 1 is a schematic diagram of a storage (memory) architecture of a multi-core system to which the embodiment of the present disclosure may be applied. The storage architecture takes into account a variety of multi-core systems and is compatible with different existing multi-core architectures.

As shown in the figure, a dynamic random access memory (DRAM) 110 in the bottom layer is an off-chip memory configured to store input and output data, such as input data to be processed by a processor core and processing results obtained by a multi-core system. The DRAM 110 may be a double data rate (DDR) memory, and DDR memory types include: a low power double data rate (LPDDR) SDRAM, a graphics double data rate (GDDR) memory, a high bandwidth memory (HBM), etc. The processor core may access an off-chip memory based on a bus protocol through an on-chip storage control unit (such as a DDR controller). The DRAM 110 may be considered as a global memory at the chip level.

The next level up in tile figure is an L2 cache 120. The L2 cache 120 may include an LLC. As mentioned earlier, LLC may have multiple operating modes, including data lock, streaming access, clearing and writing back to a system memory, etc. When a data lock mode of LLC is enabled, the characteristics of LLC lock access to data may be fully utilized to maximize the utilization of data resident in LLC and achieve the effect of bandwidth expansion.

The next level up in the figure is a shared memory 130. The shared memory 130 may enable on-chip storage share among multiple processor cores. It may be understood that there may be multiple shared memories, each of which serves multiple processor cores respectively, and the figure only shows one shared memory by way of example.

The top layer in the figure is a local memory 140 of each processor core 150, and the shared memory 130 is an on-chip storage of the processor core 150. Depending on the specific hardware architecture, the local memory 140 may be implemented differently; for example, it may be a data buffer or a register file, and the embodiments disclosed herein are not limited in this regard.

Although FIG. 1 shows a memory architecture abstracted based on various multi-core architectures, those skilled in the art should understand that some storage levels in FIG. 1 may be omitted in different hardware implementations. For example, in an implementation, there may be no shared memory 130; in another implementation, there may be no L2 cache 120, or even if LLC is configured on the hardware, its data lock mode may not be enabled, which is equivalent to having no L2 cache: in yet another implementation, there may be neither shared memory 130 nor L2 cache 120, or the data lock mode of LLC is not enabled. In the task scheduling solution of the embodiment of the present disclosure, based on the storage architecture of FIG. 1, the above-mentioned various possible implementations are comprehensively considered to provide an optimized task splitting solution to support the efficient parallel execution of the matrix multiplication-type operation task in the multi-core architecture.

In different multi-core systems or different working modes of the same multi-core system, multiple processor cores may be scheduled for parallel operations in different units or granularities. For example, in NVIDIA multi-core systems, an SM is generally used as a basic unit, while in some Cambricon multi-core systems, a computing cluster is generally used as a basic unit. In the embodiment of the present disclosure, the scheduling granularity of the processor core is called a "computing unit", and each computing unit includes one or multiple processor cores. Depending on the multi-core system, the number of processor cores contained in a computing unit may vary. For example, in some implementations, a computing cluster may be used as a computing unit, which includes four processor cores: in other implementations, four computing clusters may be used as a computing unit, which includes 16 processor cores: in still other implementations, a processor core may be used as a computing unit.

It should be noted that the "matrix multiplication-type operation task" mentioned in this article includes not only direct matrix multiplication operation tasks, but also other operation tasks that may be converted into matrix multiplication operations, such as convolution operations, Einstein summation (Einsum), etc. Matrix multiplication operations may usually be expressed as: C = A * B, where a left-multiply matrix A is a matrix of size M*K, a right-multiply matrix B is a matrix of size K*N, and an output matrix C is a matrix of size M*N. The input and output data of convolution operations usually involve dimensions such as batch (Batch), height (H), width (W), input channel (Ci), output channel (Co), convolution kernel height (Kh) and convolution kernel width (Kw), which may be converted into matrix multiplication operations by merging dimensions. For example, for convolution operations, dimensions M, N and K may be M=Batch*H*W, N=Co, K=Ci*Kh*Kw respectively. Therefore, the solution described in the embodiment of the present disclosure based on the matrix multiplication-type operation task may also be similarly applied to these operation tasks that may be converted into matrix multiplication operations.

**Matrix multiplication task splitting solution**

In the embodiment of the present disclosure, a splitting solution for a matrix multiplication-type operation is provided to distribute a matrix multiplication-type operation task to be executed on multiple processor cores of a multi-core system. In this splitting solution, the splitting is performed based on the computing unit of the multi-core system, and the number of processor cores contained in the computing unit may vary based on different implementations, so that the splitting solution may adapt to different multi-core architectures. Specifically, assuming that the number of schedulable computing units is T, the splitting solution splits the matrix multiplication-type operation task among these schedulable computing units by a row-collumn grid method, so that each computing unit computes a grid-sized output matrix in each matrix multiplication-type operation task. Since the divided grid is shaped like a chessboard, the above-mentioned row-column grid splitting method may also be referred to as "chessboard splitting" or "chessboard algorithm" in this article.

General matrix multiplication may be expressed as follows:

$$C = op\ (A)^* op\ (B) \qquad (1),$$

where

op indicates whether to perform a transpose operation on a matrix, a left-multiply matrix op (A) is a matrix of size M*K, a right-multiply matrix op (B) is a matrix of size K*N, and an output matrix C is a matrix of size M*K. In most situations, matrices A and B do not need to be transposed, so op(A)=A, op(B)=B. For simplicity, the matrices A and B are directly mentioned below, omitting op.

In the chessboard algorithm of the embodiment of the present disclosure, the output matrix C is split into r*c (row*column) grids according to the number of schedulable computing units T, where r is the number of rows and c is the number of columns. In each round of operation, each computing unit computes one grid thereof. The above row-column grid splitting may be implemented in different forms.

FIG. 2 is a schematic diagram of a first implementation form of a chessboard algorithm according to some embodiments of the present disclosure. In the first implementation form, all the schedulable T computing units (represented by Cu in the figure) are treated as a whole for processing. In each round of operation, a sub-matrix Block_C of the output matrix C is computed. The sub-matrix Block_C is split into r*c small grids, and each computing unit computes one of the small grids.

Specifically, as shown in the figure, the size of the output matrix C is M*N, all computing units compute a sub-matrix (Block_C) of the output matrix C in each round, and its size is assumed to be Block_M*Block_N. Furthermore, the sub-matrix Block_C is split into r*c (row*column) grids, a size of each grid is ΔM*ΔN, r*c=T: in other words, each computing unit needs to compute a matrix C of size ΔM*ΔN in each round of operation. The light gray in the figure represents a first round of operation, and the dark gray represents a second round of operation. In the figure, it is assumed that the number of schedulable computing units T =12.

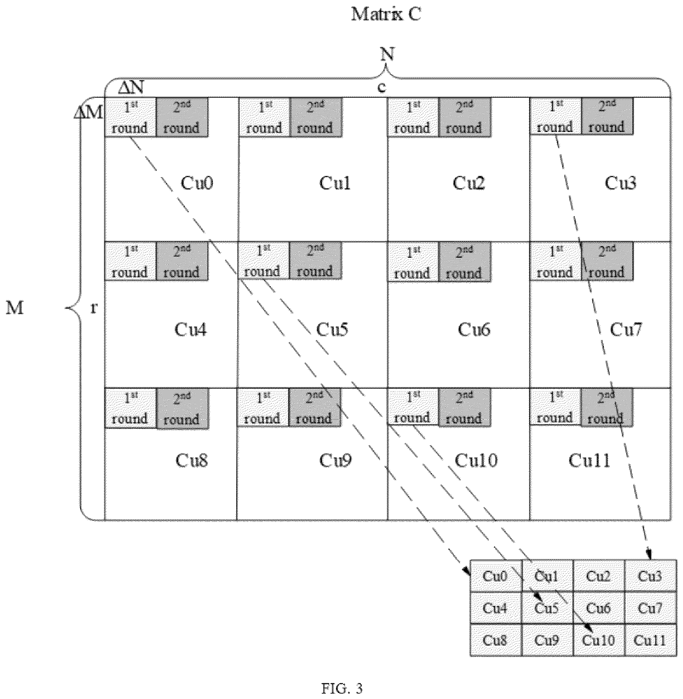

FIG. 3 is a schematic diagram of a second implementation form of a chessboard algorithm according to other embodiments of the present disclosure. In the second implementation form, an output matrix C is directly split into r*c large grids, r*c=T, and each computing unit is responsible for computing one of the large grids. Furthermore, each large grid is split into ΔM*ΔN small grids, and each computing unit computes a small grid in the corresponding large grid in each round of operation.

Specifically, as shown in the figure, a size of the output matrix C is M*N, which is first split into r*c large grids, r*c=T. In this example, T=12. Each computing unit is responsible for computing a matrix C in a large grid; in other words, each computing unit handles a complete GEMM problem, which is $GEMM_i(op(A_i), op(B_i), M_i, N_i, K, A_i, lda, B_i, ldb, C_i, ldc)$, where a subscript i represents an i-th computing unit, $C_i = op(A_i)^*op(B_i)$, $M_i$ represents the number of rows of the matrix $C_i$, $N_i$ represents the number of columns of the matrix $C_i$, lda represents a leading dimension of a sub-matrix $A_i$, which is equal to a leading dimension of the original matrix A, ldb represents a leading dimension of a sub-matrix $B_i$, which is equal to a leading dimension of the original matrix B, and ldc represents a leading dimensions of a sub-matrix $C_i$, which is equal to a leading dimension of the original matrix C. The leading dimension refers to a row width or column width of a matrix when it is stored in a memory in either row-major or column-major format. For example, when a matrix is stored row by row in the memory, the matrix is in row-major order, and its leading dimension is the row width of the matrix (which is the number of column elements). Similarly, when a matrix is stored column by column in the memory, the matrix is in column-major order, and its leading dimension is the column width of the matrix (which is the number of row elements).

Each computing unit completes the computing of the large grid it is responsible for through multiple rounds of operations. Specifically, each computing unit computes a small grid within the large grid it is responsible for in each round of operation, and the size of the small grid is $\Delta M * \Delta N$. In the figure, the first round of operation is shown in light grey, and the second round of operation is shown in dark grey. The figure also shows that processing results of all computing units in the first round of operation may be pieced together into an r*c block.

Although the above two implementation forms seem to be quite different in form, in terms of effect, the output matrix of each processing is a matrix of $r\Delta M * c\Delta N$: in other words, in each round of operation, each computing unit computes and obtains a grid-sized output matrix, and T computing units compute a total of r*c grid-sized outputs. These grids may be arranged continuously (the first implementation form): in other words, all computing units compute a continuously arranged output matrix in each round of operation: or these grids may be arranged at intervals (the second implementation form): in other words, each computing unit computes a continuously arranged output matrix.

In some embodiments, it is preferred to use the chessboard algorithm in the second implementation form. The second implementation form is conducive to clearly splitting the tasks of all computing units in the early stage, making it easier to adopt modular programming.

**Task scheduling optimization**

In the embodiment of the present disclosure, a task scheduling solution suitable for a multi-core system is provided, which determines an optimized splitting solution for a matrix multiplication-type operation task based on the above-mentioned storage architecture and chessboard algorithm, thereby minimizing the amount of data that the computing unit needs to interact with the external circuit, shortening I/O time as much as possible, and maximizing the performance of the matrix multiplication.

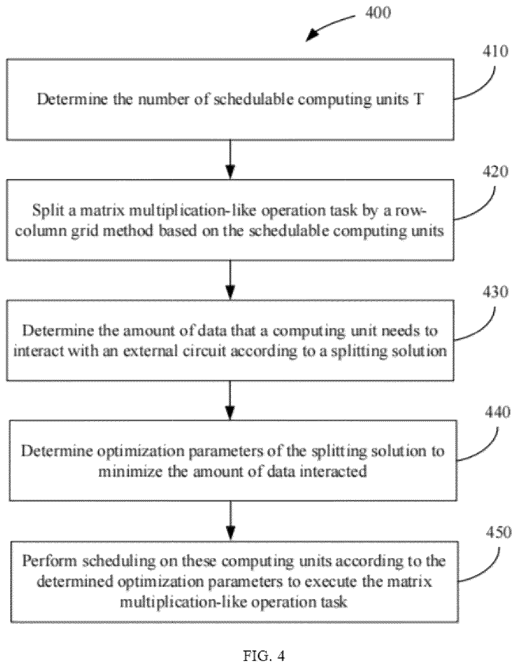

FIG. 4 is an exemplary flow chart of a task scheduling method 400 based on a multi-core system according to an embodiment of the present disclosure. The task to be scheduled includes a matrix multiplication-type operation task. The multi-core system includes multiple computing units, each computing unit includes one or multiple processor cores, and each processor core has a local memory (for example, refer to the memory architecture of FIG. 1).

As shown in FIG. 4, in step 410, the number of schedulable computing units T is determined. In some implementations, the number of schedulable computing units T may be directly determined based on the hardware configuration, such as the number of computing units configured in the multi-core system. If these computing units are idle, the operation task may be executed directly; otherwise, it is necessary to wait until the required number of computing units are idle before the operation task may be executed. Since the multi-core system usually needs to perform a variety of operation tasks, which require different computing power, some computing units will be occupied, and some computing units will be idle. In some implementations, when performing task scheduling, the number of currently schedulable computing units T may be determined based on, for example, the number of computing units that are expected to be idle within a period of time.

In step 420, the operation task is split by a row-column grid method based on the schedulable computing units. Different types of matrix multiplication-type operation tasks have slightly different row-column grid splittings. Specifically, in some implementations, when the matrix multiplication-type operation task is a first-type task, on the schedulable computing units, the splitting by the row-coluum grid method is performed according to the computing unit, so that each computing unit computes a grid-sized output matrix in each round of operation. The first-type task means that dimensions M and N are large enough, such as GEMM or GEPP-like matrix multiplication. In other implementations, when the matrix multiplication-type operation task is a second-type task, the schedulable computing units are split into several computing unit groups, and the splitting by the row-column grid method is performed according to the computing unit group, so that each computing unit group computes a grid-sized output matrix in each round of operation. The second-type task means that a dimension K is large enough, but dimensions M and N are relatively small, such as general extended precision dot-product (GEPDOT)-like matrix multiplication. It should be clear that although the output data splitting of GEMM or GEPP-like matrix multiplication is in the form of the first-type task, in both GEMM and GEPDOT, a matrix C resides on the on-chip storage shown in FIG. 1: in other words, the dimension K is split and the matrices A and B are continuously updated, GEPP is different from this, as described in detail later. In the following description, the GEMM-like matrix multiplication operation task is temporarily used as an example for explanation, and the GEPDOT-like and GEPP-like matrix multiplication tasks will be described in detail later. When the matrix multiplication task is split among multiple computing units or computing unit groups, the previous chessboard algorithm is applied.

Next, in step 430, the amount of data that a computing unit needs to interact with an external circuit is determined according to a splitting solution. As mentioned earlier, the key issue in the optimization of task splitting on multi-core architectures lies in data I/O. Therefore, when the optimized splitting solution is determined, the operation cost is mainly considered from the perspective of data input/output. Depending on the specific implementation of the storage architecture, the way the computing unit interacts with the external circuit (such as an external memory) is slightly different, and the corresponding computing method for the data amount is also slightly different. The following mainly considers two storage architectures: 1. LLC does not exist or a lock mode of LLC is not enabled: 2. LLC exists and a lock mode of LLC is enabled.

The first storage architecture (LLC off) is mainly used for scenarios where each computing unit needs to load data directly from a global memory (such as the DRAM in FIG. 1), for example, because there is no LLC, or even if there is an LLC, a data lock mode of LLC is not enabled, or even if a data lock mode of LLC is enabled, but no data is hit in the cache.

In this scenario, the computing unit needs to read data from the external memory for operation in each round of operation, and receive input data through multiple readings in multiple rounds of operations. Depending on the algorithm used on the processor core within the computing unit, the amount of data that the computing unit needs to interact with the external circuit is computed slightly differently.

In an implementation, when a size of a matrix involved in the matrix multiplication-type operation task meets a first condition, the amount of data that the computing unit needs to interact with the external circuit is determined by a first method, and the first method uses the method of keeping the output matrix C resident on the chip. The first condition may be, for example, a situation where the dimension K is large enough, such as GEMM-like and GEPDOT-like matrix multiplication tasks.

In this implementation, for example, the amount of data that each computing unit needs to read from the external memory to complete the entire matrix multiplication operation, which is the cost of data interaction, may be determined according to the following formula (2):

$$\text{cost}(M, K, N; \Delta M, \Delta N, r, c) = \left\lceil \frac{[M/r]}{\Delta M} \right\rceil \left\lceil \frac{N}{c} \right\rceil K \times dw(B) + \left\lceil \frac{[N/c]}{\Delta N} \right\rceil \left\lceil \frac{M}{r} \right\rceil K \times dw(A) \quad (2),$$

where
A is a matrix of size M*K. B is a matrix of size K*N, an output matrix C is a matrix of size M*N and is split by a r*c row-column grid method, where r is the number of rows and c is the number of columns, and [M/r] and (N/c] indicate that in this matrix multiplication task, each computing unit undertakes the operation task of the output matrix C of size [M/r]*[N/c]. ΔM is a splitting granularity of a dimension M within the computing unit, and ΔN is a splitting granularity of a dimension N within the computing unit, which are the size of the matrix C computed by each computing unit in each round. dw indicates a data width.

It may be seen from the above formula (2) that in each round of operation, each computing unit needs to compute a grid of size ΔM*ΔN, where the corresponding required data amount of the left-multiply matrix A is ΔM*K*dw(A), and the corresponding required data amount of the right-multiply matrix B is ΔN*K*dw(B). To complete the entire matrix multiplication operation, a total of $\left\lceil \frac{[M/r]}{\Delta M} \right\rceil * \left\lceil \frac{[N/c]}{\Delta N} \right\rceil$ rounds of operations are required, so a total of $\left\lceil \frac{[M/r]}{\Delta M} \right\rceil \left\lceil \frac{N}{c} \right\rceil K \times dw(B) + \left\lceil \frac{[N/c]}{\Delta N} \right\rceil \left\lceil \frac{M}{r} \right\rceil K \times dw(A)$ pieces of data needs to be read. In this embodiment, the goal of task scheduling optimization is to minimize the amount of data to be interacted represented by the formula (2).

In another implementation, when a size of a matrix involved in the matrix multiplication-type operation task meets a second condition, the matrix A or the matrix B resides on the local cache of the matrix multiplication operator, and the amount of data that the computing unit needs to interact with the external circuit is determined by a second method. The second condition is that the total data amount of the matrix A or B is less than the space size LS of the on-chip local cache, and M*K*dw(A) + 2 *(K * $n_{align}$ *dw(B) + M * $n_{align}$ *dw(C) < LS or N*K*dw(B) + 2 *(K * $m_{align}$ *dw(A) + $m_{align}$ * N *dw(C)) < LS, where $m_{align}$ is the minimum M that the on-chip processor core may handle for the matrix multiplication-type operation task, $n_{align}$ is the minimum N that the on-chip processor core may handle for the matrix multiplication-type operation task, and dw() represents a bit width; or K is less than a certain preset threshold and 2 * $m_{align}$ * $n_{align}$ *dw(C) + 3 * K * MAX($m_{align}$ *dw(A), $n_{align}$ *dw(B)) < LS. The second condition is collectively referred to as the GEPP-like matrix multiplication task. Those that do not meet the second condition may be included in the first condition. This type of matrix multiplication task will be described in detail later in the GEPP section.

In some embodiments, the impact brought by bandwidth may be further considered. Specifically, the impact factor of transmission bandwidth may be considered in the amount of data to be interacted. The impact factor is expressed as a bandwidth utilization coefficient $\gamma(\Delta L, L)$, which is equal to a ratio of an equivalent bandwidth of loading a sub-matrix from an external circuit every L pieces of data according to a data length ΔL to a full bandwidth.

Specifically, at this time, the formula (2) may be adjusted as follows.

$$cost(M, K, N; \Delta M, \Delta K, \Delta N, r, c) = \left\lceil \frac{\left\lceil \frac{M}{r} \right\rceil}{\Delta M} \right\rceil \left\lceil \frac{N}{c} \right\rceil K \times dw(B)\gamma(\Delta ldb, ldb) + \left\lceil \frac{\left\lceil \frac{N}{c} \right\rceil}{\Delta N} \right\rceil \left\lceil \frac{M}{r} \right\rceil K \times$$

$$dw(A)\gamma(\Delta lda, lda) \qquad (3),$$

where

$\gamma(AL, L)$ is a bandwidth utilization coefficient, which is equal to a ratio of an equivalent bandwidth of loading a sub-matrix from an external memory every L pieces of data according to a data length $\Delta L$ to a full bandwidth, the data length $\Delta L$ may be understood as the amount of data to be loaded, and L may be understood as a memory access stride. lda represents a size of a leading dimension of a matrix A, ldb represents a size of a leading dimension of a matrix B, $\Delta lda$ represents a splitting geanularity of the matrix A in the leading dimension, which is the size of the splitting in the leading dimension, and $\Delta ldb$ represents a splitting granularity of the matrix B in the leading dimension, which is the size of the splitting in the leading dimension.

The second storage architecture (LLC on) is mainly for scenarios where the L2 cache exists and the data lock mode is enabled. In other words, the multi-core system includes a global cache for caching data so that when the computing unit loads data from the external memory, the computing unit loads the data from the global cache preferentially, thereby achieving the effect of amplifying the bandwidth of the external memory.

In this scenario, each computing unit or computing unit group only needs to interact with the external memory once to retrieve all the data required for the matrix multiplication operation. Therefore, the amount of data required to interact with the external circuit may be determined in a manner that each computing unit or computing unit group interacts with the external circuit once to retrieve all the data required to perform the matrix multiplication-type operation task.

In an implementation, for the GEMM-like matrix multiplication operation task, the amount of data that each computing unit needs to read from the external memory to complete the entire matrix multiplication operation, which is the cost of data interaction, may be determined according to the following formula (4):

$$cost(M, K, N; \Delta M, \Delta N, r, c) = \left\lceil \frac{M}{r\Delta M} \right\rceil \times B_{size} + \left\lceil \frac{N}{c\Delta N} \right\rceil \times A_{size} \qquad (4),$$

where

A is a matrix of size M*K, B is a matrix of size K*N, an output matrix C is a matrix of size M*N and is split by a r*c row-column grid method, where r is the number of rows, c is the number of columns, $\Delta M$ is a splitting granularity of a dimension M among the computing units, $\Delta N$ is a splitting granularity of a dimension N among the computing units, $A_{size}$ is the total data amount of the matrix A, and $B_{size}$ is the total data amount of the matrix B.

It may be seen from the above formula (4) that due to the existence of the global cache, the required data may be cached in the global cache at one time. In the subsequent operations, the computing unit hits the data in the global cache and retrieves the data from the global cache without generating data interaction with the DRAM. The data amount $B_{size}$ of the matrix B is used a total of $\left\lceil \frac{M}{r\Delta M} \right\rceil$ times, and the data amount $A_{size}$ of the matrix A is used a total of $\left\lceil \frac{N}{c\Delta N} \right\rceil$ times. In this embodiment, the goal of task scheduling optimization is to minimize the amount of data to be interacted represented by the formula (4).

Similarly, in some embodiments, the impact brought by bandwidth may be further considered, and at this time, the formula (4) may be adjusted as follows.

$$cost(M, K, N; \Delta M, \Delta K, \Delta N, r, c) = \left\lceil \frac{M}{r\Delta M} \right\rceil \times B_{size}\gamma(\Delta ldb, ldb) + \left\lceil \frac{N}{c\Delta N} \right\rceil \times A_{size}\gamma(\Delta lda, lda)$$

$$(5),$$

where

the meaning of $\gamma(\Delta L, L)$ is the same as the above.

Next, in step 440, optimization parameters of the splitting solution are determined to minimize the amount of data to be interacted. It may be seen from the formula for the amount of data to be interacted determined above that when the number of schedulable computing units T is known, parameters that may be changed include r, c, $\Delta M$, $\Delta N$; in other words, the parameters that may be changed include: the parameters split in the chessboard algorithm: the number of rows r and the number of columns c: and the size of the output matrix computed by each computing unit in a single round of operation: $\Delta M * \Delta N$. Optionally or additionally, when the dimension K is relatively large and needs to be split, a splitting granularity $\Delta K$

of the dimension K may also be included. Therefore, the entire search space may be constructed to find the optimization parameters that minimize the amount of data to be interacted. The search space depends on the algorithm used on the chip and mainly on the space allocation of the on-chip memory, which will be described in detail later.

Finally, in step 450, scheduling is performed on these computing units according to the determined optimization parameters to perform the matrix multiplication-type operation task. As mentioned above, the optimization parameters include: the parameters r and c split in the chessboard algorithm; and the size of the output matrix computed by each computing unit in a single round of operation: $\Delta M * \Delta N$; and the optimization parameters selectively include the splitting granularity $\Delta K$, or called search granularity, of the dimension K. Therefore, according to these optimization parameters, the matrix multiplication task may be split and scheduled to each computing unit accordingly for operation. As such, the amount of data interaction between the computing unit and the external memory may be minimized, the I/O time may be further shortened, and the performance of the matrix multiplication may be improved.

Search space construction

When the optimization parameters of the splitting solution are determined, a search space may be constructed according to some constraints, so as to search for the optimal parameters in the search space. These constraints mainly include the following aspects: constraint on the number of computing units, and constraint on the capacity and space allocation of each level of processor memory.

The constraint on the number of computing units T is that when the chessboard algorithm is used, the number of grids obtained by the row-column grid splitting must be consistent with the number of computing units/computing unit groups, which may be expressed as formula (6):

$$r*c=T/d \qquad (6),$$

where
r is the number of rows, c is the number of columns, d=1 when the matrix multiplication-type operation task is the first-type task, and d>1 when it is the second-type task, where d is the number of computing units in each group of computing units (which will be described in detail in the GEPDOT section later).

For each level of cache space division in the on-chip storage hierarchy of the multi-core system, a corresponding search sub-space needs to be constructed. The constraint on the size of the capacity of each level of memory of the processor core is related to the algorithm used to implement the matrix multiplication operation, and more specifically, to the matrix residency method adopted. In some embodiments of the present disclosure, for matrix multiplication-type operation tasks (such as GEMM, GEPDOT, etc.) where the size of the matrix meets the first condition, the matrix C resides on the local cache of the matrix multiplication operator, and the sub-matrices of the matrices A and B are continuously updated according to the dimension K until the dimension K is computed in a loop, and other levels of memory only store the sub-matrices of the matrices A and B. In other embodiments of the present disclosure, for matrix multiplication-type operation tasks (such as GEPP, etc.) where the size of the matrix meets the second condition, the matrix A (or the matrix B) resides on the local cache of the matrix multiplication operator, the sub-matrices of the matrix B (or the matrix A) are continuously updated, and the sub-matrices of the matrix C obtained by the last operation are stored in the off-chip memory, which will be described in detail in the GEPP section below.

Considering a multi-core processor with a two-level storage architecture on a chip, which means that there are S processor cores in a computing unit, each processor core has its own local cache, and these S processor cores share a cache. In the computing unit, the output matrix block $C^{block}$ ($\Delta M$, $\Delta N$) is evenly split into each processor core according to rows and columns, and it is assumed that $\Delta M$ is split into $S_m$ parts among the cores and $\Delta N$ is split into $S_n$ parts among the cores, where $S= S_m * S_n$. At the same time, $\Delta K$ is split into $S_k$ times of operations, where $S_k >= 1$. That is to say, in a round of large loop (the operation of one output matrix block $C^{block}$ ($\Delta M$, $\Delta N$) is called a large loop), the processor core loads a sub-matrix of size $\Delta K/ S_k$ from the previous level of memory once, and it takes a total of $S_k$ times to load and compute $\Delta K$. Each operation in the $S_k$ times of operations may be called a small loop. Therefore, the constraint on the size of the capacity of the local memory of the processor core may be determined based on the amount of data required for a round of small loop operations and the amount of matrix resident data, which may be expressed as formula (7):

$$P \left[ dw(A) \frac{\Delta M}{S_m} \frac{\Delta K}{S_k} + dw(B) \frac{\Delta N}{S_n} \frac{\Delta K}{S_k} \right] + dw(C) \frac{\Delta M}{S_m} \frac{\Delta N}{S_n} < Size_{DataCache} \qquad (7),$$

where
P indicates whether ping-pong pipelining is applied on the chip, when ping-pong pipelining is applied, P=2, otherwise, P=1; $Size_{DataCache}$ indicates the size of the capacity of the local memory.

When each computing unit in the memory architecture includes a shared memory, the search space may further include the constraint on the size of the capacity of the shared memory. Considering that the upper level of memory of the shared memory is an off-chip memory, the computing unit needs to complete the loading (a round of large loop operations) of the input matrix blocks A$^{block}$ and B$^{block}$ of the matrix multiplication task at one time. At this time, the constraint on the size of the capacity of the shared memory may be expressed as formula (8):

$$P[\Delta M * dw(A) + \Delta N * dw(B)] * \Delta K < Size_{SHMEM} \qquad (8).$$

Similarly, P indicates whether ping-pong pipelining is applied, when ping-pong pipelining is applied, P=2, otherwise, P=1; $Size_{SHEME}$ indicates the size of the capacity of the shared memory.

In an implementation, on a multi-core processor with a two-level storage architecture on a chip, when the number S of processors within the computing unit meets the condition that $\sqrt{S}$ is an integer, a Cannon algorithm is used to implement the matrix multiplication task.

The Cannon algorithm is an algorithm that optimizes matrix block multiplication and is a memory-efficient algorithm. In the Cannon algorithm, the left-multiply matrix A and the right-multiply matrix B involved in the matrix multiplication operation are split into S left-multiply matrix blocks and S right-multiply matrix blocks, where $\sqrt{S}$ is a positive integer greater than or equal to 2, which is called a splitting coefficient of the Cannon algoritlun. For example, when $\sqrt{S}=2$, the matrices A and B may be split into 4 matrix blocks respectively. When $\sqrt{S} = 3$, the matrices A and B may be split into 9 matrix blocks respectively. For another example, when $\sqrt{S} = 4$, the matrices A and B may be split into 16 matrix blocks respectively. They may also be split into 4 "2×2" left-multiply matrix blocks and right-multiply matrix blocks. The Cannon algorithm is performed inside each "2×2" left-multiply matrix block and right-multiply matrix block, and then the Cannon algorithm is performed externally. Through the aforementioned block processing, a large matrix multiplication operation may be split into S matrix multiplication tasks, and these S matrix multiplication tasks may be assigned to S processor cores for parallel execution.

In the Cannon algorithm, in order to make the row and column subscripts of the left-multiply matrix block and the right-multiply matrix block meet the multiplication requirements, loop shift transfer is purposefully performed on each row and column, thereby reducing the total storage requirements of the processor core. Based on different memory architectures, data transfer among the processor cores may be through a shared memory core shared by multiple processor cores, or through a data channel among the processor cores.

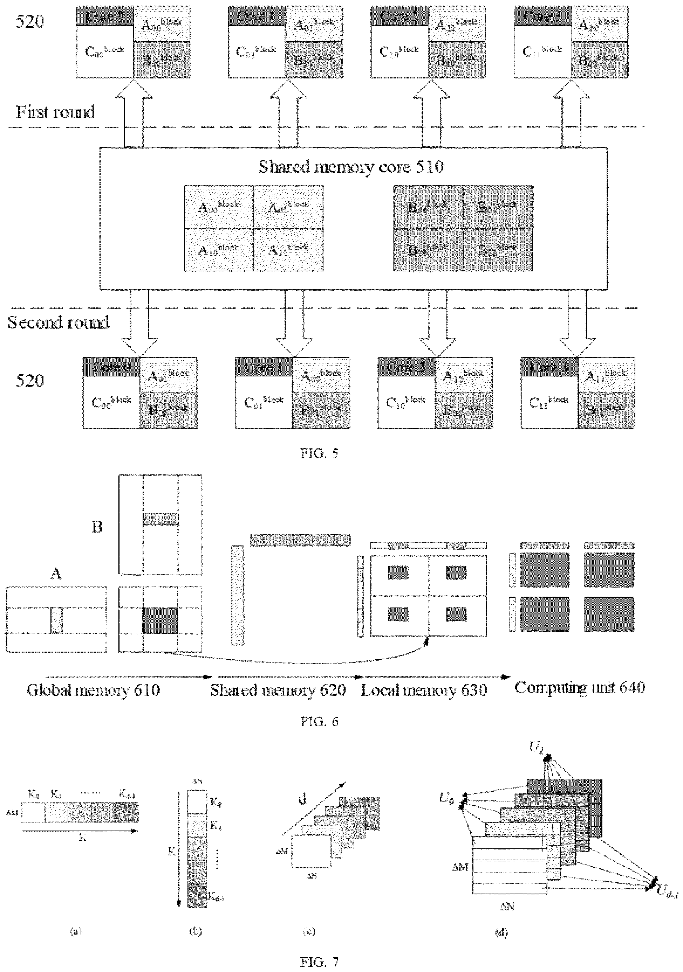

FIG. 5 is an exemplary implementation of a Cannon algorithm according to an embodiment of the present disclosure. In this example, it is assumed that $\sqrt{S} = 2$, which means that the matrix to be operated is split into 2×2 matrix blocks and allocated to four processor cores for processing; these four processor cores correspond to one computing unit and share one shared memory core to realize data transmission.

As shown in the figure, a shared memory core 510 stores input matrix blocks A$^{block}$ and B$^{block}$ of the matrix multiplication task assigned to the computing unit including the four processor cores 520 to execute in the current operation round. It may be understood that when the aforementioned chessboard algorithm is applied, a matrix multiplication result of these two input matrix blocks corresponds to an output matrix block C$^{block}$ of size ΔM*ΔN. These two input matrices are split into four matrix blocks, $A_{00}^{block}, A_{01}^{block}, A_{10}^{block}, A_{11}^{block}$ and $B_{00}^{block}, B_{01}^{block}, B_{10}^{block}, B_{11}^{block}$, respectively. Correspondingly, the output matrix block C$^{block}$ as the result matrix may also be split into four matrix blocks $C_{00}^{block}, C_{01}^{block}, C_{10}^{block}, C_{11}^{block}$.

Based on the above matrix block, the four processor cores may respectively execute the following fonnulas to compute and obtain their corresponding matrix multiplication results $C_{00}^{block}, C_{01}^{block}, C_{10}^{block}, C_{11}^{block}$:

$$C_{00}^{block} = A_{00}^{block} * B_{00}^{block} + A_{01}^{block} * B_{10}^{block}$$

$$C_{01}^{block} = A_{00}^{block} * B_{01}^{block} + A_{01}^{block} * B_{11}^{block}$$

$$C_{10}^{block} = A_{10}^{block} * B_{00}^{block} + A_{11}^{block} * B_{10}^{block}$$

$$C_{11}^{block} = A_{10}^{block} * B_{10}^{block} + A_{11}^{block} * B_{11}^{block}$$

It may be seen from the above formula that the operation may be completed in two rounds. The upper part of FIG. 5 shows input matrix blocks required by each processor core in a first round, and the lower part of FIG. 5 shows input matrix blocks required by each processor core in a second round.

FIG. 6 is a schematic storage diagram of data at different storage levels. As shown in the figure, input matrices A and B that need to perform matrix multiplication operations are stored in a global memory 610, which is, for example, the off-chip memory DRAM in FIG. 1. The loading pipeline of the input matrices A and B is implemented on a shared memory 620. In some embodiments, an output matrix C is not cached in the shared memory core, but resides directly on the local memory of the processor core, and is then cyclically accumulated in the dimension K as needed. The local memory 630 of the processor core also stores relatively small matrices A and B. The figure also shows the matrix data used and the matrix data computed at the computing unit 640 of the processor core.

Alternatively or additionally, in some embodiments, in order to improve processing efficiency, ping-pong pipelining may be used to load the input matrices A and B from the shared memory 620 to the local memory 630 of the processor core. In these embodiments, the shared memory core may be configured with at least two storage areas to support data access with a certain memory in one of the storage areas while data access with another memory in another storage areas. These two storage areas may be called ping storage space and pong storage space respectively; in other words, a pingpong pipeline method is used.

Through the description of the above algorithm, when $\sqrt{S} = 2$, a corresponding search space may be constructed. Specifically, $S_m = S_n = S_k = 2$ in the formula (7), P=2 in the formula (7) and formula (8). The optimization parameters of the splitting solution that minimizes the amount of data to be interacted described above may be searched in the search space.

In some implementations, when searching, a search stride may be set according to the following parameters:

$$\Delta K = k \max \left( \Delta L, K_{align} \right), \Delta lda = i\Delta L, \Delta ldb = j\Delta L \qquad (9),$$

where

i, j, k are positive integers; $\Delta L$ represents a basic splitting stride of data, which is generally equal to a length of a cache line of DRAM; $\Delta lda$ and $\Delta ldb$ represent splitting granularities of leading dimensions of the matrices A and B respectively, which may also be called search strides, which may be integer multiples of $\Delta L$; $K_{align}$ represents an alignment parameter; and $\Delta K$ represents a splitting granularity of a dimension K, which may be an integer multiple of a maximum value between $\Delta L$ and $K_{align}$.

More generally, when searching, the search stride may be set according to the following parameters.

The search granularity of the leading dimension of each matrix may be determined according to the basic splitting granularity of the leading dimension, the minimum alignment requirement of the processor core for the leading dimension, and the number of times the leading dimension is split within the computing unit. In an example, the leading dimension may be searched as follows:

$$\Delta ld = i * \max \left( \Delta L, S_{ld} * ld_{align} \right) \qquad (10),$$

where

$\Delta ld$ is a splitting size of a leading dimension of a matrix; $\Delta L$ indicates a basic splitting granularity of a dimension, which is generally equal to a length of a cache line of DRAM: $ld_{align}$ indicates that this dimension is within the minimum alignment requirement of the processor core: $S_{ld}$ indicates the number of times this dimension is split within the computing unit; and i is an arbitrary positive integer to be searched and determined. Dimensions of the leading dimension (1d) of the matrix are shown in the following table.

| | 1d of matrix A | | 1d of matrix B | | 1d of matrix C | |
|---|---|---|---|---|---|---|
| | Transposed | Not transposed | Transposed | Not transposed | Transposed | Not transposed |
| Row major | M | K | K | N | M | N |
| Column major | K | M | N | K | N | M |

For a non-leading dimension D (D is M, K, or N), its search granularity may be determined according to the minimum alignment requirement of the processor core for the non-leading dimension and the number of times the non-leading dimension is split within the computing unit. In an example, the non-leading dimension may be searched based on the following formula:

$$\Delta D = j * S_d * d_{align} \qquad (11),$$

where

$\Delta D$ is a splitting size of a non-leading dimension; $d_{align}$ indicates that this dimension is within the minimum alignment requirement of the processor core: $S_d$ indicates the number of times this dimension is split within the computing umit; and $j$ is an arbitrary positive integer to be searched and determined.

Therefore, by searching in the search space, the optimization parameters of the splitting solution that minimizes the corresponding amount of data to be interacted (the cost mentioned above) may be found. These optimization parameters include the parameters r and c split in the chessboard algorithm; the size of the output matrix computed by each computing unit in a single round of operation: $\Delta M * \Delta N$; and the splitting granularity $\Delta K$ of the dimension K.

In actual operation, it is possible to find multiple optimal combinations that meet the above. In this case, the influence of any one or multiple the following parameters may be additionally considered to further select appropriate optimization parameters.

One parameter is called compute to global memory access (CGMA). The CGMA is a ratio of the number of compute operations to the number of memory operations, which may reflect the efficiency of compute operations and memory operations.

In some embodiments, when the output matrix C resides on the on-chip memory (LLC ON), the CGMA may be defined as:

$$CGMA_{device} = \frac{1000 * TFLOPS}{Bandwidth_{DRAM}} \qquad (12),$$

$$CGMA_{loads} = \frac{2rc\Delta M\Delta K\Delta N}{dw(A)\Delta M\Delta K * \min(r, \beta) + dw(B)\Delta N\Delta K * \min(c, \beta)}$$
$$= \frac{2rc\Delta M\Delta N}{dw(A)\Delta M * \min(r, \beta) + dw(B)\Delta N * \min(c, \beta)} \qquad (13),$$

where

$CGMA_{device}$ is the CGMA of the hardware itself, TFLOPS refers to one trillion ($=10^{12}$) times of floating-point operations per second; $Bandwidth_{DRAM}$ is a bandwidth of an off-chip memory DRAM; $CGMA_{loads}$ is the CGMA of the load; and $\beta$ is a ratio of a total LLC bandwidth to a total DRAM bandwidth, which is:

$$\beta = \frac{Bandwidth_{LLC}}{Bandwidth_{DRAM}} \qquad (14),$$

where

$\beta$ indicates the maximum bandwidth magnification that LLC may obtain.

In the formula (12), $CGMA_{device}$ is the CGMA of the hardware itself; in the formula (13), $CGMA_{loads}$ is the CGMA of the load; and when $CGMA_{loads} > CGMA_{device}$, the load is a computing bottleneck, otherwise it is an IO bottleneck. To further elaborate, the CGMA is first used to determine whether the obtained splitting combination is a computing bottleneck or an IO bottleneck. If it is the IO bottleneck, the optimization target is the IO volume, and the smaller the IO volume, the better; when the obtained splitting combination is a computing bottleneck, the splitting combination with the largest computing utilization is selected. When the computing utilizations are the same, the combination with the maximum CGMA is selected.

In some other embodiments, in the case of LLC OFF, the CGMA may be defined as:

$$CGMA = \frac{2\Delta M' * \Delta N'}{\Delta M' + \Delta N'} \qquad (15),$$

where

$$\Delta M^{'} = \min\left(\Delta M, \left\lceil \frac{M}{r} \right\rceil\right), \Delta N^{'} = \min\left(\Delta N, \left\lceil \frac{N}{c} \right\rceil\right).$$

Another parameter is processor core utilization. In order to accelerate large-scale matrix multiplications, current computer hardware uses tensor core technology, which implements a relatively large-scale matrix multiplication on a single computing unit. For example, in some hardware architectures, within one computing unit, one beat may compute 16*8*16 (M*K*N) matrix multiplication. This requires the dimensions M and N to be aligned to 16. However, in the embodiment of the present disclosure, for different loads, after being split by the chessboard algorithm, the dimensions M and N will suffer a loss in computing power due to alignment. Therefore, processor core (for example, tensor core) utilization $U_{core}$ may be used to evaluate the splitting solution, as shown in the following formula:

$$U_{core} = \frac{\lceil M/r \rceil}{\lceil \lceil M/r \rceil / m_{align} \rceil * m_{align}} \frac{\lceil N/c \rceil}{\lceil \lceil N/c \rceil / n_{align} \rceil * n_{align}} \quad (16),$$

where
$m_{align}$ and $n_{align}$ represent the alignment requirements of the processor core in the dimensions M and N respectively.
In some embodiments. the influence of the above two parameters may be combined. Specifically, when the splitting solution is an IO bottleneck, the CGMA and IO (the above cost) may be considered as the optimization target, which means that the optimal optimization parameters are further selected preferentially based on the CGMA: and when the splitting solution is a computing bottleneck, the processor core utilization needs to be considered, which means that the optimal optimization parameters are further selected preferentially based on the processor core utilization.
Therefore, through the optimized scheduling solution of the embodiment of the present disclosure, by splitting the task among the computing units using the chessboard algorithm, the splitting solution that minimizes the amount of data to be interacted may be found. Furthermore, the better CGMA may be ensured.

## Kernel-side GEMM execution

In intelligent computing systems, high-performance multi-core systems are usually used as accelerator cards for servers, which exchange data with a host central processing unit (CPU) through a peripheral component interconnect express (PCIe) bus. The splitting process of the embodiment of the present disclosure is usually completed at the host. The host determines the optimization parameters of the splitting solution according to the above optimization problem, including the chessboard parameters (r, c) and the splitting parameters ($\Delta M, \Delta N, \Delta K$). Afterwards, the host passes these optimization parameters from the CPU to the high-performance multi-core system by launching the kernel. The parameters required to launch the kernel include but are not limited to a matrix A, a matrix B, a matrix C, a dimension M, a dimension K, a dimension N, a leading dimension lda of the matrix A, a leading dimension ldb of the matrix B, a leading dimension ldc of the matrix C, matrix blocks $\Delta M, \Delta K, \Delta N$, chessboard parameters r, c, d, and additional operation operators op_A, op_B, op_C on the matrices A, B, C, and so on. Each computing unit in the multi-core system may determine the GEMM task it needs to process based on the chessboard parameters.
According to specific implementation forms (such as the two previous implementation forms) of the chessboard algorithm, the computing unit determines its own GEMM task according to a corresponding rule, which means that the computing unit determines specific block addresses of the matrices A and B that it needs to process. Those skilled in the art may easily deduce the block of the matrix multiplication task processed by each computing unit based on the splitting principles of the previous implementation forms, which will not be elaborated here.

## GEPDOT solution

In some cases, such as neural network training, a case where the dimension K is particularly large is often encountered. For example, there are several training scales in the Transformer model: (M=3240, K=43640, N=1024), (M=3360, K=43640, N=1024), and (M=3312, K=43640, N=512), or there are such training scales in computer vision (CV) networks: (M=256, K=25088, N=1024), (M=64, K=401408, N=256), and (M=64, K=100352, N=512), and so on. There are even some cases where the dimensions M and N are smaller. The classification of matrix multiplication for these cases is generally called GEPDOT.
For GEPDOT, if the chessboard algorithm mentioned above is still used, for example, splitting according to the scenario where one computing unit includes four processor cores, the following situation may occur: M and N computed on each processor core or computing unit are very small. At this time, the access perfonnance of the global memory (DRAM) and on the chip will be relatively poor, resulting in very poor overall performance.
In view of this, in some embodiments, for the case where K is very large, the matrix multiplication task may be perfonned by splitting K and by reduction, where each processor core or computing unit computes a complete M and N.

Furthermore, in some embodiments, for the case where M and N are relatively large and K is very large, the dimensions M, N and K may be simultaneously split among the processor cores. This will make full use of bandwidth and computing resources to achieve better performance.

Specifically, all schedulable computing units may be grouped, and each group includes d computing units. The dimension K is split among the computing units within the group, and each processor core or computing unit computes a complete matrix $C^{block}$. If $\Delta K$ is split among the processor cores within each computing unit (for example, $\Delta K$ is evenly split to each processor core in the computing unit for operation), reduction and sununation are first performed within the computing unit, and finally, results computed by the computing units are reduced. Before the reduction, each computing unit needs to synchronize and "inform" each other that they have completed the cyclic operation of the dimension K. It is assumed that T schedulable computing units are split into s groups, each with d computing units. Among these s groups, the chessboard algorithm is used to perform the splitting of the matrix multiplication task.

Under this group splitting, the constraints of the search space described above need to be adjusted as follows.

The constraint on the number of computing units T:

$$T \bmod d = 0, \; r * c = T/d \quad (17),$$

where
similarly, T is the total number of computing units, d is the number of computing units in each group, r is the number of rows, and c is the number of columns.

In the computing unit, the constraint on the size of the capacity of the local memory of the processor core is still formula (7), but the on-chip splitting coefficient ($S_m, S_n, S_k$) of ($\Delta M, \Delta N, \Delta K$) needs to be modified:

$$P \left[ dw(A) \frac{\Delta M}{S_m} \frac{\Delta K}{S_k} + dw(B) \frac{\Delta N}{S_n} \frac{\Delta K}{S_k} \right] + dw(C) \frac{\Delta M}{S_m} \frac{\Delta N}{S_n} < Size_{DataCache} \quad (7).$$

In an implementation, when there is a multi-level cache structure on the chip, a Cannon algorithm is applied, and $\Delta K$ is not split among the processor cores, but $\Delta K$ needs to be computed in Sk batches, and then $S_m = \sqrt{S}, S_n = \sqrt{S}, S_k = \sqrt{S}$ ; in an implementation, both $\Delta M$ and $\Delta N$ are not split among the processor cores, only $\Delta K$ is split into S parts, and after each operation is completed, a reduction operation is performed among the cores, and then $S_m = 1, S_n = 1, S_k = S$.

When each computing unit in the memory architecture includes a shared memory, the constraint on the size of the capacity of the shared memory is still:

$$P[\Delta M * dw(A) + \Delta N * dw(B)] * \Delta K < Size_{SHMEM} \quad (18).$$

The search stride is:

$$\Delta K = k \max \left( \Delta L, K_{align} \right), \Delta lda = i\Delta L, \Delta ldb = j\Delta L \quad (19).$$

Different grouping methods may be used for different multi-core systems. During the grouping process, processor cores or computing units that may communicate with each other are prioritized to be grouped together, and an inter-core communication function is fully utilized to achieve "handshake" synchronization, and then the reduction is performed. The entire process does not require the host to participate in the work, so the value of d needs to be consistent with the munber of computing units that may communicate with each other. For computing units that cannot communicate with each other, the host may issue a synchronization request. The host waits for each computing unit to complete its own matrix multiplication task (the computing units store their own operation results on the DRAM), and then sends a reduction task to each computing unit. Therefore, it is only necessary to consider whether d may be divisible by the total number T of computing units.

In a hardware implementation, 4 (or 2, or 8, or 16) computing units are connected through a bus, so that the processor cores may communicate with each other. At this time, d is 4 (or the corresponding 2, or 8, or 16). The reduction process sends the matrix multiplication operation results to other computing units through the bus. The other computing units accumulate the results in an element-wise manner to obtain a final output result. In another hardware implementation, multiple computing units share an on-chip cache, and these computing units may communicate with each other to achieve efficient synchronization functions. The on-chip cache may be a distributed shared memory (DSM) or a scratch pad memory (SPM). Assuming that in this implementation, four computing units share one DSM or SPM, then d may be preferentially considered to be 4. The DSM or SPM provides a data cache function. After each computing unit completes its own matrix multiplication block operation task, it stores an operation result (a matrix multiplication partial stum) on the cache, and notifies other cores to load the partial sum from the cache through a synchronization mechanism and perform the reduction and summation to obtain the final output result. FIG. 7 is a group splitting example according to an embodiment of the present disclosure.

(a) and (b) of FIG. 7 exemplarily illustrate the splitting of the dimension K within each group of computing units (each group has d computing units) in each round of operation. As shown in (a), for a matrix block A, a size of its dimension M is $\Delta M$, and a dimension K is split into d matrix sub-blocks according to the number d of computing units; as shown in (b), for a matrix block B, a size of its dimension N is $\Delta N$, and the dimension K is split into d matrix sub-blocks according to the number d of computing units. These matrix sub-blocks are correspondingly assigned to each computing unit in the group, and each computing unit computes one partial sum result matrix of $\Delta M * \Delta N$. The pairings of the matrix sub-blocks are shown in the figure by different shading. After each computing unit completes the operation, operation results may be directly stored on the SPM or stored on the DRAM with cache lock.

(c) of FIG. 7 shows that d partial sum result matrices of $\Delta M * \Delta N$ are stored on the SPM. As shown in the figure, these d partial sum result matrices need to be reduced; in other words, these d partial sum result matrices need to be element-wise accumulated. This requires that after each processor core or computing unit completes its own matrix multiplication operation and stores the obtained partial sum (on the DSM, SPM or DRAM, or sending the obtained partial sum to the shared memory of each cluster through the bus), all computing units and processor cores in each group are forced to synchronize through the internal communication mechanism or the host, then the $C^{block}$ matrix ($\Delta M * \Delta N$) is split into d computing units, and each computing unit computes the reduction sum of $\frac{1}{d} C^{block}$ matrix. Specifically, the $\frac{1}{d} C^{block}$ matrix may be split into S processor cores in the computing unit for reduction sum. At this time, each processor core needs to undertake the operation task of the $\frac{1}{S*d} C^{block}$ matrix. The reduction part is the element-wise accumulation of the d matrix multiplication partial sums. The processor core may use the addition tree method to compute the respective output during the reduction process. After the operation is completed, the operation result is stored in the corresponding position of the DRAM. In other words, each computing unit uses a stride IO to load data of size $\frac{1}{d} * \Delta M * \Delta N$ from the SPM. The computing unit may compute the matrix C of $\frac{1}{d} * \Delta M * \Delta N$ using the binary tree reduction (addition tree) method, and after the operation is completed, it may be directly stored back to the corresponding position of the global memory (such as the DRAM). (d) of FIG. 7 shows a schematic diagram of splitting the $C^{block}$ matrix and performing the partial stun operation in d computing units.

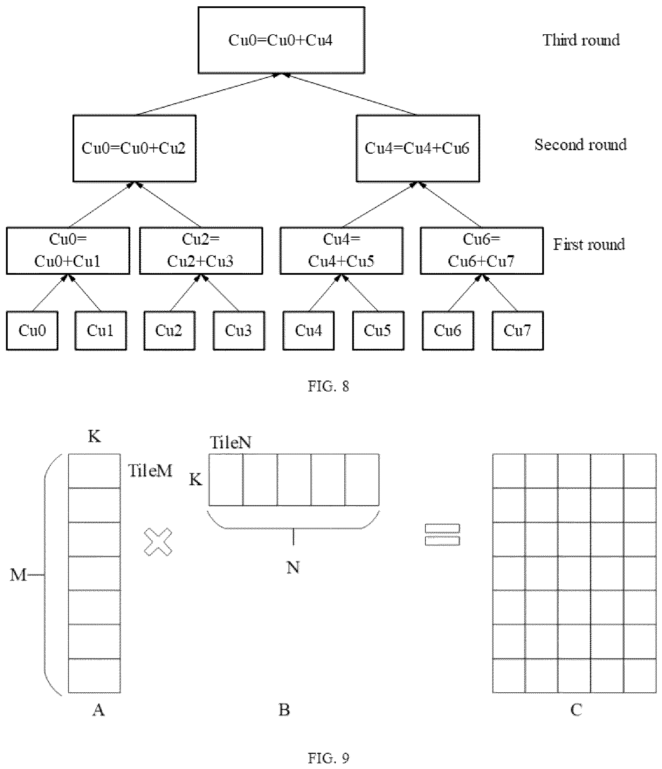

FIG. 8 is an example of a reduction operation process of a processor core. In this example, it is assumed that d=8=$2^3$. Through multiple rounds of pairwise accumulation, three rounds of reduction operations are required to obtain a final result. In each round of reduction operation: intermediate results computed by each computing unit or reduction results of the previous round are accumulated in pairs to obtain a reduction result of a current round of reduction operation.

In an optional implementation, the reduction process of the partial sum of the matrix C may also be implemented using atomic operations (atomic add). Each processor core computes a part of the matrix $C^{block}$. When the processor core issues an atomic operation, it may lock the DRAM address corresponding to the part of the matrix $C^{block}$ it computes. Other processor cores are unable to perform operations on the data of the address at this time. The atomic operation is an addition operation. After the atomic add is completed, the address is directly released. Other processor cores continue to perform the same atomic addition operation until the element-wise accumulation of all partial sums is completed to obtain a complete matrix C.

The above GEPDOT solution may be enabled when the matrix multiplication operation task meets specific conditions.

Specifically, firstly, it may be judged based on sizes of a left-multiply matrix and a right-multiply matrix in the matrix multiplication, where the dimension K must be sufficiently large compared to the dimensions M and N, for example, being at least greater than a specified multiple of the dimension M or the dimension N. Based on experience, in some implementations, K is at least greater than 4 times of M or 4 times of N. Secondly, when it is assumed that the splitting is performed by a row-column grid method according to the computing unit, data assigned to a single computing unit for processing does not meet the memory access requirement of the minimum cache line, or does not meet the requirement of the device CGMA. Specifically, after a pre-splitting among the T computing units, the prior knowledge of $\Delta M$ and $\Delta N$ is obtained, where $\Delta M$ is a size of a dimension M of a C matrix block assigned to each computing unit for operation after the matrix C is split among the T computing units, and $\Delta N$ is a size of a dimension N of a C matrix block assigned to each computing unit for operation after the matrix C is split among the T computing units If $\Delta M$ and $\Delta N$ do not meet the memory access requirements of the minimum cache line (CL) of the global memory (such as DRAM), or do not meet the requirements of the device CGMA, it is necessary to enter the GEPDOT solution. In summary, to enter GEPDOT, the following two conditions are required to be met at the same time:

$$(1)\ K \geq 4M\ or\ K \geq 4N$$

$$(2)(transA\ and\ \Delta M * sizeof(type) < CL)\ or\ \Delta N * sizeof(type) < \quad CL\ or\ CGMA_{case} < CGMA_{device},$$

where *transA* represents the transpose of the matrix A.

In condition (2), the device CGMA is defined as:

$$CGMA_{device} = \frac{1000 * TFLOPS_{tiny\ core}}{Bandwidth_{DRAM}} \qquad (20).$$

$$CGMA_{case} = \frac{2(\frac{\Delta M}{S_m})(\frac{\Delta N}{S_n})}{(\frac{\Delta M}{S_m} + \frac{\Delta N}{S_n}) * sizeof(type)} \qquad (21).$$

The computing power $TFLOPS_{tiny\ core}$ here refers to the computing power of each tiny computing core (which is the processor core within the computing unit, such as the intelligent processing unit (IPU) in some Cambricon architectures and the tensor core in the graphics processing unit (GPU)). $Bandwidth_{DRAM}$ is the memory access bandwidth of DRAM. $S_m$ indicates that in one computing unit, $\Delta M$ is split into $S_m$ parts, $S_n$ indicates that in one computing unit, $\Delta N$ is split into $S_n$ parts, and there is a total of $S_m * S_n$ tiny computing cores in the computing unit.

The goal of pre-splitting is to make the split $\Delta M$ (TileM in pseudo code) and the split $\Delta N$ (TileN in pseudo code) as close as possible. An exemplary pseudo code for pre-splitting is given below.

```
priorTilingStrategy(int &TileM,
                    int &TileN,
                    int priorTileM,
                    int priorTileN,
                    int M,
                    int N,
                    int TotalCore) {
    int row = 1;
    float opt_goal = FLT_MAX;
    int row = 1;
    int col = TotalCore;
    if (N / M > TotalCore) {
        row = 1;
        col = TotalCore;
    } else if (M / N > TotalCore) {
        row = TotalCore;
        col = 1;
    } else {
        int r = 1;
        while (row <= int(sqrt(TotalCore))) {
            int c = TotalCore / r;
            if (TotalCore % c == 0) {
                float ratio1 = ceil(float(M) / r) / ceil(float(N) / c);
                float ratio2 = ceil(float(M) / c) / ceil(float(N) / r);
                if (abs(ratio1 - 1) <= opt_goal) {
                    row = r;
                    col = c;
                    opt_goal = abs(ratio1 - 1);
```

```
        }
        if (abs(ratio2 - 1) <= opt_goal) {
            row = c;
            col = r;
            opt_goal = abs(ratio2 - 1);
        }
    }
    r++;
}
}
TileM = min(ceil(M / row), priorTileM);
TileN = min(ceil(N / col), priorTileN);
}
```

From the above code, it may be seen that if either N or M exceeds T (the total number of computing units) times the other, the smaller number will not be split, but the larger number will be split into T parts: in other situations, a splitting method that makes TileM and TileN as close as possible will be found.

**GEPP solution**

In some situations, matrix multiplication-type tasks may encounter situations where the dimension K is relatively small, and either or both of the dimensions M and N are relatively large. The classification of the matrix multiplication of these situations is generally called GEPP. At this time, splitting is mainly performed on the dimensions M and N, and the dimension K is not suitable for further splitting.

FIG. 9 is a schematic diagram of matrix multiplication operation splitting for a GEPP mode.

As shown in the figure, a left-multiply matrix A is split in the dimension M and is not split in the dimension K, where $\Delta M$ is a size of the split matrix block. A right-multiply matrix B is split in the dimension N and is not split in the dimension K, where $\Delta N$ is a size of the split matrix block. A product result matrix C is obtained by multiplying the split matrix blocks.

The matrix block obtained by splitting the left-multiply matrix A as above is called $A^{block}$, whose size in the dimension M is $\Delta M$, and the size in the dimension K remains K; the matrix block obtained by splitting the right-multiply matrix B as above is called $B^{block}$, whose size in the dimension N is $\Delta N$, and the size in the dimension K remains K.

When the above matrix operations are implemented on a multi-core computing apparatus, the dimensions M and N may be split according to the chessboard algorithm. For example, when splitting according to the second implementation form, each computing unit is responsible for performing operations on a pair of split matrix blocks $A^{block}$ and $B^{block}$, and is thus responsible for a matrix block of size $\Delta M * \Delta N$ in the result matrix C. Furthermore, the operations between each split matrix block $A^{block}$ and $B^{block}$ may be split on multiple processor cores within one computing unit.

In order to reduce the need for frequent data loading during the operation process, a solution in which either matrix resides may be adopted. For a matrix multiplication operation, the resident party may be a left-multiply matrix block $A^{block}$ or a right-multiply matrix block $B^{block}$,

In the embodiment of the present disclosure, in order to find the optimal scheduling solution, it is necessary to weigh the chessboard splitting policies for the two cases of keeping the matrix A resident and keeping the matrix B resident, evaluate the amount of data interaction with the external circuit generated by keeping the matrix A resident and keeping the matrix B resident respectively, and select the residency solution with the smallest amount of data interaction.

In the case of LLC lock enabled:
in the case where the A matrix block resides, the B matrix block and the C matrix block are cyclically replaced. Within a computing unit, the $\Delta M$ dimension is evenly split onto the S processor cores (tiny cores) of the computing unit. When splitting according to the chessboard algorithm, when the A matrix block resides, $\Delta M$ needs to be evenly split onto the S processor cores of the computing unit.

At this point, the cost function of data interaction needs to be adjusted as follows:

$$\text{cost}(M, K, N; \Delta M, \Delta N, r, c) = \left\lceil \frac{M}{r \Delta M} \right\rceil \times B_{size} + A_{size} \qquad (22).$$

The constraint on the search space needs to be adjusted as follows.

The constraint on the number of computing units T:

$$r^*c = T \qquad (23),$$

where

r is the number of rows, and c is the number of columns.

The constraint on the size of the capacity of the local memory of the processor core:

$$dw(A)K\frac{\Delta M}{S} + P[dw(B)K\Delta N + dw(C)\frac{\Delta M}{S}\Delta N] < Size_{DataCache} \qquad (24),$$

where

S is the number of processor cores within a computing unit; P indicates whether ping-pong pipelining is applied, where when ping-pong pipelining is applied, P=2, otherwise, P=1; and $Size_{DataCache}$ indicates the size of the capacity of the local memory.

The constraint on the size of the capacity of the shared memory:

$$P[dw(B)K\Delta N + dw(C)\Delta M\Delta N] < Size_{SHMEM} \qquad (25).$$

The meaning of each parameter is the same as before.

The CGMA may be adjusted as follows:

$$CGMA_{loads}^{reside\,A} = \frac{2rcK\Delta M\Delta N}{dw(B)K\Delta N * \min(c, \beta) + r * c * \Delta M \Delta N dw(C)}$$
$$= \frac{2rcK\Delta M}{dw(B)K*\min(c,\beta) + r*c*\Delta M dw(C)} \qquad (26).$$

There is a min(c, β ) in the above formula. This is because although LLC avoids repeatedly loading data from DRAM, related data still needs to be loaded from LLC, and the bandwidth for loading data is up to β times that of DRAM, where β is the bandwidth magnification factor of LLC relative to DRAM.

Similarly, when the B matrix block resides, the A matrix block and the C matrix block are cyclically replaced. In order to obtain the maximum CGMA and the minimum IO within a computing unit, ΔN is evenly split into S processor cores (tiny cores).

At this point, the cost function of data interaction needs to be adjusted as follows:

$$\text{cost}(M, K, N; \Delta M, \Delta N, r, c) = \left\lceil \frac{N}{c \Delta N} \right\rceil \times A_{size} + B_{size} \qquad (27).$$

The constraint on the search space needs to be adjusted as follows.

The constraint on the number of computing units T:

$$r^*c = T \qquad (28),$$

where

r is the number of rows, and c is the number of columns .

The constraint on the size of the capacity of the local memory of the processor core:

$$dw(B)K\frac{\Delta N}{S} + P[dw(A)K\Delta M + dw(C)\Delta M\frac{\Delta N}{S}] < Size_{DataCache} \qquad (29).$$

The meaning of each parameter is the same as before.

The constraint on the size of the capacity of the shared memory:

$$P[dw(A)K\Delta M + dw(C)\Delta M \Delta N] < Size_{SHMEM} \qquad (30).$$

The meaning of each parameter is the same as before.

The CGMA may be adjusted as follows:

$$CGMA_{loads}^{reside\ B} = \frac{2rcK\Delta M \Delta N}{dw(A)K\Delta M * \min(r,\beta) + r * c * \Delta M \Delta N dw(C)}$$

$$= \frac{2rcK\Delta N}{dw(BA)K * \min(r,\beta) + r*c*\Delta N dw(C)} \qquad (31).$$

The results of the above two splitting forms are compared, and the best splitting and residency method is selected for matrix multiplication operations.

LLC does not exist or the lock mode of LLC is not enabled:

When the A matrix block resides, the cost function of data interaction needs to be adjusted as follows:

$$\text{cost}(M,K,N;\Delta M,\Delta N,r,c) = \left\lceil \frac{[M/r]}{\Delta M} \right\rceil \left\lceil \frac{N}{c} \right\rceil K \times dw(B) + \left\lceil \frac{M}{r} \right\rceil K \times dw(A) \qquad (32).$$

The CGMA may be adjusted as follows:

$$CGMA_{loads}^{reside\ A} = \frac{2K\Delta M \Delta N}{dw(B)K\Delta N + dw(C)\Delta M \Delta N} = \frac{2K\Delta M}{dw(B)K + dw(C)\Delta M} \qquad (33).$$

When the B matrix block resides, the cost function of data interaction needs to be adjusted as follows:

$$\text{cost}(M,K,N;\Delta M,\Delta N,r,c) = \left\lceil \frac{N}{c} \right\rceil K \times dw(B) + \left\lceil \frac{[N/c]}{\Delta N} \right\rceil \left\lceil \frac{M}{r} \right\rceil K \times dw(A) \qquad (34).$$

The CGMA may be adjusted as follows:

$$CGMA_{loads}^{reside\ B} = \frac{2K\Delta M \Delta N}{dw(A)K\Delta M + \Delta M \Delta N dw(C)} = \frac{2K\Delta N}{dw(A)K + \Delta N dw(C)} \qquad (35).$$

**Parallel computing expansion**

Those skilled in the art will appreciate that although various solutions of the embodiments of the present disclosure have been described above with reference to a multi-core system architecture for intelligent computing, the various embodiments of the present disclosure may also be applied to general parallel computing systems, especially to supercomputing systems for computing extremely large-scale matrix multiplication operations.

A supercomputing system may be abstracted as including a master core (CPU, which is equivalent to a host) and N slave cores that assist in computing. The N slave cores include multiple GPU cards or intensive computing cards, and system on chip (SoC) chips that specialize in intensive computing. If the slave cores cannot communicate with each other and all data is distributed by the master core, the splitting policy in this scenario may adopt the "LLC OFF" policy. If the slave cores can communicate with each other, then at a certain moment, data reused between cores may be obtained through exchange, so the splitting policy in this scenario may adopt the "LLC ON" policy. The Rain limitation on the splitting model only needs to consider the capacity of DRAM corresponding to each core.

The embodiment of the present disclosure also provides a task scheduling apparatus, including a processor and a memory, where the processor is configured to perfonn program instructions; the memory is configured to store the program instructions, and when the program instructions are loaded and perfonned by the processor, the processor performs the task scheduling method described in any embodiment of the present disclosure. The embodiment of the present disclosure also provides a computer-readable storage medium in which program instructions are stored, where when the program instructions are loaded and performed by a processor, the processor performs the task scheduling method described in any embodiment of the present disclosure. The embodiment of the present disclosure also provides a computer program product, including computer programs or instructions, where when the computer programs or instructions are performed by a processor, the task scheduling method described in any embodiment of the present disclosure is implemented. The embodiment of the present disclosure also provides a processing apparatus, including the above task scheduling apparatus. The embodiment of the present disclosure also provides a chip, including the above processing apparatus. Further, the present disclosure also provides a board card, including the above chip.

According to different application scenarios, an electronic device or apparatus of the present disclosure may include a server, a cloud server, a server cluster, a data processing apparatus, a robot, a computer, a printer, a scanner, a tablet, a smart terminal, a PC device, an Internet of Things terminal, a mobile terminal, a mobile phone, a traffic recorder, a navigator, a sensor, a webcam, a camera, a video camera, a projector, a watch, a headphone, a mobile storage, a wearable device, a visual terminal, an autonomous driving terminal, a vehicle, a household appliance, and/or a medical device. The vehicle includes an airplane, a ship, and/or a car; the household appliance includes a television, an air conditioner, a microwave oven, a refrigerator, an electric rice cooker, a humidifier, a washing machine, an electric lamp, a gas cooker, and a range hood; and the medical device includes a nuclear magnetic resonance spectrometer, a B-ultrasonic scanner, and/or an electrocardiograph. The electronic device or apparatus of the present disclosure may be further applied to Internet, Internet of Things, data center, energy, transportation, public management, manufacturing, education, power grid, teleconununications, finance, retail, construction sites, medical, and other fields. Further, the electronic device or apparatus of the present disclosure may be further used in application scenarios including cloud, edge, and terminal related to artificial intelligence, big data, and/or cloud computing. In one or multiple embodiments, according to the solution of the present disclosure, an electronic device or apparatus with high computing power may be applied to a cloud device (such as the cloud server), while an electronic device or apparatus with low power consumption may be applied to a terminal device and/or an edge device (such as a smart phone or the webcam). In one or multiple embodiments, hardware information of the cloud device is compatible with that of the terminal device and/or the edge device. As such, according to hardware information of the terminal device and/or the edge device, appropriate hardware resources may be matched from hardware resources of the cloud device to simulate hardware resources of the terminal device and/or the edge device, so as to complete unified management, scheduling, and collaborative work of terminal-cloud integration or cloud-edge-terminal integration.

It is required to be explained that for the sake of brevity, the present disclosure describes some method embodiments as a series of actions and combinations thereof, but those skilled in the art may understand that the solution of the present disclosure is not limited by an order of actions described. Therefore, according to the present disclosure or under the teaching of the present disclosure, those skilled in the art may understand that some steps of the method embodiments may be performed in a different order or simultaneously. Further, those skilled in the art may understand that the embodiments described in the present disclosure may be regarded as optional embodiments; in other words, actions and units involved thereof are not necessarily required for the implementation of a certain solution or some solutions of the present disclosure. Additionally, according to different solutions, descriptions of some embodiments of the present disclosure have their own emphases. In view of this, those skilled in the art may understand that, for a part that is not described in detail in a certain embodiment of the present disclosure, reference may be made to related descriptions in other embodiments.

In terms of specific implementations, according to the present disclosure and under the teaching of the present disclosure, those skilled in the art may understand that several embodiments disclosed in the present disclosure may be implemented in other ways that are not disclosed in the present disclosure. For example, for units in the aforementioned electronic device or apparatus embodiment, the present disclosure divides the units on the basis of considering logical functions, but there may be other division methods during actual implementations. For another example, multiple units or components may be combined or integrated into another system, or some features or functions in the units or components may be selectively disabled. With respect to a connection between different units or components, the connection discussed above in combination with drawings may be direct or indirect coupling between the units or components. In some scenarios, the direct or indirect coupling involves a communication connection using an interface. The communication interface may support electrical, optical, acoustic, magnetic, or other forms of signal transmission.

In the present disclosure, units described as separate components may be or may not be physically separated. Components shown as units may be or may not be physical units. The components or units may be located in a same position or distributed to multiple network units. Additionally, according to actual requirements, some or all of the units may be selected for achieving the purpose of the solution described in the embodiments of the present disclosure. Additionally, in some scenarios, the plurality of units in the embodiments of the present disclosure may be integrated into one unit, or each of the units may be physically separated.

In some other implementation scenarios, the integrated unit may be implemented in the form of hardware. The hardware may be a specific hardware circuit, which may include a digital circuit and/or an analog circuit, and the like. A physical implementation of a hardware structure of the circuit includes but is not limited to a physical component. The physical component includes but is not limited to a transistor, or a memristor, and the like. In view of this, various apparatuses (such as the computing apparatus or other processing apparatus) described in the present disclosure may be implemented by an appropriate hardware processor, such as a CPU, a GPU, a field-programmable gate array (FPGA), a digital signal processor (DSP), and an application specific integrated circuit (ASIC), and the like. Further, the storage unit or the storage apparatus may be any appropriate storage medium (including a magnetic storage medium or a magneto-optical storage medium), such as a resistive random access memory (RRAM), a dynamic random access memory (DRAM), a static random access memory (SRAM), an enhanced dynamic random access memory (EDRAM), a high bandwidth memory (HBM), a hybrid memory cube (HMC), a read only memory (ROM), and a random access memory (RAM), and the like.

The embodiments of the present disclosure have been described in detail above. The present disclosure explains principles and implementations of the present disclosure with specific examples. Descriptions of the embodiments above are only used to facilitate understanding of the method and core ideas of the present disclosure. Simultaneously, those skilled in the art may change the specific implementations and application scope of the present disclosure based on the ideas of the present disclosure. In summary, the content of this specification should not be construed as a limitation on the present disclosure.

**Claims**

1. A task scheduling method based on a multi-core system, wherein the task comprises a matrix multiplication-type operation task, the multi-core system comprises multiple computing units, each computing unit comprises one or multiple processor cores, and each processor core has a local memory, and the method comprises:
   determining the number of schedulable computing units T:
   splitting the matrix multiplication-type operation task by a row-column grid method based on the schedulable computing units:
   determining the amount of data that the computing unit needs to interact with an external circuit according to a splitting solution:

   determining optimization parameters of the splitting solution to minimize the amount of data to be interacted; and
   scheduling the matrix multiplication-type operation task to be executed in parallel on the computing units according to the optimization parameters.

2. The method of claim 1, wherein splitting the matrix multiplication-type operation task by the row-column grid method based on the schedulable computing units comprises:

   performing the splitting by the row-colunm grid method according to the computing units when the matrix multiplication-type operation task is a first-type task, so that each computing unit computes an output matrix of a grid size in each round of operation: or
   splitting the computing units into several computing unit groups, and performing the splitting by the row-column grid method according to the computing unit groups when the matrix multiplication-type operation task is a second-type task, so that each computing unit group computes an output matrix of a grid size in each round of operation.

3. The method of claim 2, wherein the matrix multiplication-type operation task is the second-type task when the following conditions are met:

   a dimension K is at least greater than a specified multiple of a dimension M or a dimension N, wherein a left-multiply matrix A is a matrix of size M*K, and a right-multiply matrix B is a matrix of size K*N; and
   data assigned to a single computing unit for processing does not meet a memory access requirement of a minimum cache line, or does not meet a requirement of device compute to global memory access (CGMA), when it is assumed that the splitting is performed by the row-column grid method according to the computing unit.

4. The method of any one of claims 2-3, wherein determining the amount of data that the computing unit needs to interact with the external circuit according to the splitting solution comprises:

   determining the amount of data that the computing unit needs to interact with the external circuit according to a first method when a size of a matrix involved in the matrix multiplication-type operation task meets a first condition, wherein the first method uses a method of keeping an output matrix C resident on the chip: or
   determining the amount of data that the computing unit needs to interact with the external circuit according to a second method when the size of the matrix involved in the matrix multiplication-type operation task meets a second condition, wherein the second method uses a method of keeping the left-multiply matrix A or the right-multiply matrix B resident on the chip.

5. The method of claim 4, wherein the size of the matrix meets the second condition when the size of the matrix meets the following condition, otherwise the size of the matrix meets the first condition, and the second condition comprises the following:

the total data amount of the matrix A or the matrix B is less than a space size LS of an on-chip local cache, and $M*K*dw(A) + 2*(K*n_{align}*dw(B) + M* n_{align}*dw(C) < LS$ or $N*K*dw(B) + 2*(K*m_{align} *dw(A) + m_{align} * N *dw(C)) <$ LS, wherein $m_{align}$ is a minimum M that an on-chip processor core is able to process for the matrix multiplication-type operation task, $n_{align}$ is a minimum N that the on-chip processor core is able to process for the matrix multiplication-type operation task, and dw() represents a bit width; or
K is less than a preset threshold and $2*m_{align}*n_{align}*dw(C) + 3*K*MAX(m_{align} *dw(A), n_{align}*dw(B)) < LS$.

6. The method of any one of claims 4-5, wherein determining the amount of data that the computing unit needs to interact with the external circuit according to the first method comprises:

determining the amount of data of the left-multiply matrix A and the right-multiply matrix B that each computing unit or each group of computing units needs to read to complete the operation task according to the following formula:

$$\text{cost}(M, K, N; \Delta M, \Delta N, r, c) = \left\lceil \frac{\lceil M/r \rceil}{\Delta M} \right\rceil \left\lceil \frac{N}{c} \right\rceil K \times dw(B) + \left\lceil \frac{\lceil N/c \rceil}{\Delta N} \right\rceil \left\lceil \frac{M}{r} \right\rceil K \times dw(A),$$

wherein
A is a matrix of size M*K, B is a matrix of size K*N, an output matrix C is a matrix of size M*N and is split by an r*c row-column grid method, wherein r is the number of rows, c is the number of columns, ΔM is a splitting granularity of a dimension M among computing units or computing unit groups, ΔN is a splitting granularity of a dimension N among computing units or computing unit groups, and dw() represents a data width.

7. The method of any one of claims 4-6, wherein determining the amount of data that the computing unit needs to interact with the external circuit according to the second method comprises:
evaluating the amount of data interaction with the external circuit generated by keeping the left-multiply matrix A resident and by keeping the right-multiply matrix B resident respectively, and selecting the residency solution with the smallest amount of data interaction, wherein the amount of data of the left-multiply matrix A and the right-multiply matrix B that each computing unit needs to read to complete the operation task is determined according to the following formulas:

when the solution of keeping the matrix A resident is adopted:

$$\text{cost}(M, K, N; \Delta M, \Delta N, r, c) = \left\lceil \frac{\lceil M/r \rceil}{\Delta M} \right\rceil \left\lceil \frac{N}{c} \right\rceil K \times dw(B) + \left\lceil \frac{M}{r} \right\rceil K \times dw(A),$$

and
when the solution of keeping the matrix B resident is adopted:

$$\text{cost}(M, K, N; \Delta M, \Delta N, r, c) = \left\lceil \frac{N}{c} \right\rceil K \times dw(B) + \left\lceil \frac{\lceil N/c \rceil}{\Delta N} \right\rceil \left\lceil \frac{M}{r} \right\rceil K \times dw(A),$$

wherein A is a matrix of size M*K, B is a matrix of size K*N, an output matrix C is a matrix of size M*N and is split by an r*c row-colunm grid method, wherein r is the number of rows, c is the number of columns, ΔM is a splitting granularity of a dimension M among computing units, ΔN is a splitting granularity of a dimension N among computing units, and dw() represents a data width.

8. The method of claim 1, wherein the multi-core system further comprises a global cache for caching data so that the computing unit preferentially loads from the global cache when loading data from an external memory, and determining the amount of data that each computing unit or each group of computing units needs to interact with the external circuit according to the splitting solution comprises:
determining the amount of data that needs to be interacted with the external circuit by a method that each computing unit or each computing unit group interacts with the external circuit once and retrieves all data required to perform the matrix multiplication-type operation task.

9. The method of any one of claims 4-8, wherein determining the amount of data that each computing unit or each group of computing units needs to interact with the external circuit according to the splitting solution comprises: considering an influence factor of transmission bandwidth in the amount of data to be interacted, wherein the influence factor is expressed as a bandwidth utilization coefficient $\gamma(\Delta L, L)$, which is equal to a ratio of an equivalent bandwidth of loading a sub-matrix from the external circuit every L pieces of data according to a data length $\Delta L$ to a full bandwidth.

10. The method of any one of claims 2-9, wherein determining the optimization parameters of the splitting solution to minimize the amount of data to be interacted comprises:

> constructing a search space of the optimization parameters of the splitting solution: and
> searching the optimization parameters of the splitting solution that minimize the amount of data to be interacted in the search space.

11. The method of claim 10, wherein the search space is constructed according to the following constraint:
a constraint on the number of computing units: r*c=T/d, wherein when the matrix multiplication-type operation task is the first-type task, d=1: and when the matrix multiplication-type operation task is the second-type task, d>1, wherein d is the number of computing units in each group of computing units.

12. The method of any one of claims 10-11, wherein the search space is further constructed according to the following constraint:
constructing a corresponding search subspace based on the adopted matrix residency method for each level of cache space splitting in an on-chip storage hierarchy of the multi-core system.

13. The method of claim 12, wherein the on-chip storage hierarchy comprises two levels: a local cache and a shared cache, and constructing the corresponding search subspace comprises:

> constructing a shared cache search subspace according to a constraint on a size of a shared cache capacity by the amount of data required for a round of large loop operation; and
> constructing a local cache search subspace according to a constraint on a size of a local cache capacity by the amount of data required for a round of small loop operation and a matrix resident data volume.

14. The method of any one of claims 10-13, wherein when searching is performed within the search space, a search granularity is set according to the following parameters:

> a search granularity of a leading dimension of a matrix is determined according to a basic splitting granularity of the leading dimension, a minimum alignment requirement of a processor core for the leading dimension, and the number of times the leading dimension is split within a computing unit; and
> a search granularity of a non-leading dimension of a matrix is determined according to a minimum alignment requirement of a processor core for the non-leading dimension and the number of times the non-leading dimension is split within a computing unit.

15. The method of any one of claims 9-13, wherein the optimization parameters of the splitting solution comprise:

> parameters of the splitting by the row-column grid method: r and c;
> a size of an output matrix computed by each computing unit or each computing unit group in a single round of operation: $\Delta M * \Delta N$; and
> a splitting granularity $\Delta K$ of a dimension K within a computing unit when the dimension K needs to be split.

16. The method of any one of claims 2-14, wherein the splitting by the row-column grid method comprises any one of the following:

> all schedulable computing units or computing unit groups totally compute a sub-matrix Block_C of an output matrix C in each round of operation, the sub-matrix Block_C is split into r*c small grids, and each computing unit or each computing unit group computes one of the small grids: or
> the output matrix C is split into r*c large grids, each large grid is further split into $\Delta M*\Delta N$ small grids, and each computing unit or each computing unit group computes a small grid in a corresponding large grid in each round of operation.

17. The method of any one of claims 1-15, wherein when there are multiple groups of optimization parameters that satisfy minimizing the amount of data to be interacted, the method further comprises:

determining compute to global memory access (CGMA) of a splitting solution under each group of optimization parameters and/or processor core utilization in a computing unit, wherein the CGMA is a ratio of the number of computing operations to the number of memory operations, and the processor core utilization is a ratio of effective computing of a processor core to actual computing of the processor core under alignment restrictions; and selecting an optimal optimization parameter from the plurality of groups of optimization parameters based on the CGMA and/or the processor core utilization.

18. The method of claim 16, wherein selecting the optimal optimization parameter from the plurality of groups of optimization parameters based on the CGMA and/or the processor core utilization comprises:

selecting the optimal optimization parameter based on the CGMA when the splitting solution belongs to an IO bottleneck situation; or
selecting the optimal optimization parameter based on the processor core utilization when the splitting solution belongs to a computing bottleneck situation.

19. A task scheduling apparatus, comprising a processor and a memory, wherein

the processor is configured to perform program instructions;
the memory is configured to store the program instructions; and
when the program instructions are loaded and performed by the processor, the processor performs the task scheduling method of any one of claims 1-18.

20. A computer-readable storage medium, on which program instructions are stored, wherein when the program instructions are loaded and performed by a processor, the processor performs the task scheduling method of any one of claims 1-18.

21. A computer program product, comprising computer programs or instructions, wherein when the computer programs or instructions are performed by a processor, the task scheduling method of any one of claims 1-18 is implemented.

22. A processing apparatus, comprising the task scheduling apparatus of claim 19.

23. A chip, comprising the processing apparatus of claim 22.

24. A board card, comprising the chip of claim 23.

FIG. 1

FIG. 2

Matrix C

FIG. 3

400

410

Determine the number of schedulable computing units T

420

Split a matrix multiplication-like operation task by a row-column grid method based on the schedulable computing units

430

Determine the amount of data that a computing unit needs to interact with an external circuit according to a splitting solution

440

Determine optimization parameters of the splitting solution to minimize the amount of data interacted

450

Perform scheduling on these computing units according to the determined optimization parameters to execute the matrix multiplication-like operation task

FIG. 4

520

| Core 0 | $A_{00}^{block}$ |
| $C_{00}^{block}$ | $B_{00}^{block}$ |

| Core 1 | $A_{01}^{block}$ |
| $C_{01}^{block}$ | $B_{11}^{block}$ |

| Core 2 | $A_{11}^{block}$ |
| $C_{10}^{block}$ | $B_{10}^{block}$ |

| Core 3 | $A_{10}^{block}$ |
| $C_{11}^{block}$ | $B_{01}^{block}$ |

First round

Shared memory core 510

| $A_{00}^{block}$ | $A_{01}^{block}$ |
| $A_{10}^{block}$ | $A_{11}^{block}$ |

| $B_{00}^{block}$ | $B_{01}^{block}$ |
| $B_{10}^{block}$ | $B_{11}^{block}$ |

Second round

520

| Core 0 | $A_{01}^{block}$ |
| $C_{00}^{block}$ | $B_{10}^{block}$ |

| Core 1 | $A_{00}^{block}$ |
| $C_{01}^{block}$ | $B_{01}^{block}$ |

| Core 2 | $A_{10}^{block}$ |
| $C_{10}^{block}$ | $B_{00}^{block}$ |

| Core 3 | $A_{11}^{block}$ |
| $C_{11}^{block}$ | $B_{11}^{block}$ |

FIG. 5

B

A

Global memory 610    Shared memory 620    Local memory 630    Computing unit 640

FIG. 6

(a)    (b)    (c)    (d)

FIG. 7

Cu0=Cu0+Cu4      Third round

Cu0=Cu0+Cu2      Cu4=Cu4+Cu6      Second round

Cu0=
Cu0+Cu1    Cu2=
Cu2+Cu3    Cu4=
Cu4+Cu5    Cu6=
Cu6+Cu7    First round

Cu0   Cu1   Cu2   Cu3   Cu4   Cu5   Cu6   Cu7

FIG. 8

FIG. 9

## INTERNATIONAL SEARCH REPORT

| International application No. |
|---|
| **PCT/CN2024/080265** |

**A. CLASSIFICATION OF SUBJECT MATTER**

G06F 9/48(2006.01)i

According to International Patent Classification (IPC) or to both national classification and IPC

**B. FIELDS SEARCHED**

Minimum documentation searched (classification system followed by classification symbols)

IPC: G06F9/-

Documentation searched other than minimum documentation to the extent that such documents are included in the fields searched

Electronic data base consulted during the international search (name of data base and, where practicable, search terms used)

CNABS; CNTXT; CNKI; DWPI; VEN; USTXT; WOTXT; EPTXT; IEEE; 百度, BAIDU: 多核, 任务调度, 矩阵乘法, 拆分, 棋盘, 最小化, 输入/输出, 优化, multi-core, task scheduling, GEMM, general matrix multiplication, split, chessboard, minimize, I/O, optimize

**C. DOCUMENTS CONSIDERED TO BE RELEVANT**

| Category* | Citation of document, with indication, where appropriate, of the relevant passages | Relevant to claim No. |
|---|---|---|
| X | CN 115221101 A (ZHONGKE CAMBRICON TECHNOLOGY CO., LTD.) 21 October 2022 (2022-10-21) <br> description, paragraphs 25-136, and figures 1-11 | 1-24 |
| X | CN 115221102 A (ZHONGKE CAMBRICON TECHNOLOGY CO., LTD.) 21 October 2022 (2022-10-21) <br> description, paragraphs 27-135, and figures 1-12 | 1-24 |
| A | CN 107168683 A (INSTITUTE OF SOFTWARE, CHINESE ACADEMY OF SCIENCES et al.) 15 September 2017 (2017-09-15) <br> entire document | 1-24 |
| A | CN 109445850 A (CHENGDU SUNWAY TECHNOLOGY CO., LTD.) 08 March 2019 (2019-03-08) <br> entire document | 1-24 |
| A | US 2020183833 A1 (ADVANCED MICRO DEVICES INC.) 11 June 2020 (2020-06-11) <br> entire document | 1-24 |

☐ Further documents are listed in the continuation of Box C.　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **31 May 2024** | **04 June 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**EP 4 693 041 A1**

## INTERNATIONAL SEARCH REPORT
### Information on patent family members

International application No.

**PCT/CN2024/080265**

| Patent document cited in search report | | | Publication date (day/month/year) | Patent family member(s) | | | Publication date (day/month/year) |
|---|---|---|---|---|---|---|---|
| CN | 115221101 | A | 21 October 2022 | WO | 2022218374 | A1 | 20 October 2022 |
| | | | | CN | 115221101 | B | 19 December 2023 |
| | | | | US | 2024028666 | A1 | 25 January 2024 |
| | | | | EP | 4325373 | A1 | 21 February 2024 |
| CN | 115221102 | A | 21 October 2022 | CN | 115221102 | B | 19 January 2024 |
| | | | | WO | 2022218373 | A1 | 20 October 2022 |
| CN | 107168683 | A | 15 September 2017 | CN | 107168683 | B | 09 June 2020 |
| CN | 109445850 | A | 08 March 2019 | | None | | |
| US | 2020183833 | A1 | 11 June 2020 | US | 11030095 | B2 | 08 June 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310332479